# FASCICULE DE BREVET EUROPEEN

(11) **EP 2 361 498 B1**
(45) Date de publication et mention de la délivrance du brevet: **21.03.2018**
(21) Numéro de dépôt: 11150469.2
(22) Date de dépôt: 10.01.2011
(51) Int. Cl.: A01J 25/13

(54) **Ensemble comportant au moins un plateau inférieur pour l'égouttage de fromages et deux moules adaptés pour être disposés sur ledit plateau**
Anordnung, die mindestens einen unteren Teller zum Abtropfen von Käse und zwei zu diesem Teller passende Formen umfasst
Assembly comprising at least one lower plate for straining cheese and two moulds suitable for being arranged on said plate

(30) Priorité: 10.02.2010 FR 1050934
(43) Date de publication de la demande: 31.08.2011
(73) Titulaire: Isigny-Sainte Mère, 14230 Isigny sur Mer (FR)
(72) Inventeur: Delahaye, Daniel, 14400, BAYEUX (FR); Helaine, Christian, 37130, CINQ MARS LA PILE (FR)
(74) Mandataire: Zimmermann, Alain

(56) Documents cités:
- FR-A1- 2 197 506
- FR-A1- 2 911 043
- FR-A2- 2 287 166
- FR-A5- 2 110 736

## Description

La présente invention concerne un ensemble comportant au moins un plateau inférieur pour l'égouttage de fromages et deux moules adaptés pour être disposés sur le dit plateau.

Actuellement, il existe au moins deux solutions principales pour réaliser l'égouttage de fromages de type à pâte molle, à croûte fleurie ou lavée contenus dans des moules placés sur un plateau d'égouttage.

Dans la première solution, chaque moule est indépendant des autres et présente un corps cylindrique, par exemple de section circulaire ou conique. Ces moules individuels, réalisés par exemple en bois, en aluminium étamé, en acier inoxydable ou en matière plastique injectée, sont posés côte-à-côte sur un plateau ou une table, généralement pourvu de rebords périphériques dressés. Une fois les moules remplis de caillé, par exemple à la louche pour du Camembert dit « à la louche », ils sont stockés un certain temps dans une salle adaptée afin que le sérum s'écoule pour laisser place à la matière sèche du caillé. Lors de cette opération d'égouttage, il est courant d'avoir à retourner les moules. Cette opération, lorsqu'elle est effectuée manuellement, nécessite beaucoup de temps car il convient de retourner chaque moule un par un. Cela nécessite aussi une certaine adresse de la part de l'opérateur et de la place car le moule n'est en général pas replacé exactement à son emplacement d'origine mais à une zone laissée libre sur le plateau ou la table.

Une autre solution consiste à réaliser un bloc-moules comportant, d'une seule pièce, plusieurs moules liés les un aux autres, par exemple une vingtaine répartis en lignes et rangées et posés sur un store d'égouttage lui-même placé sur un plateau inférieur. Dans ce cas, l'opération de retournement permet de retourner tous les moules d'un seul coup, d'où un gain de temps notable. En particulier, le document FR 2197506 divulgue un dispositif de fabrication de fromages du genre camembert comprenant des moules destinés à recevoir le caillé et le laisser égoutter, et des clayettes d'affinage sur lesquelles les fromages sont démoulés et séjournent un certain temps, lesdites clayettes comprenant des butées de centrage longitudinal et transversal desdits moules posés sur lesdites clayettes pour le démoulage des fromages, lesdits moules étant formés d'une pluralité d'alvéoles assemblées entre elles de façon démontable. Cependant, le coût d'un bloc-moules est plus ou moins élevé, selon sa méthode de fabrication dont les plus connues sont l'injection monobloc ou le clipage de X moules sur une plaque perforée de trous au bon entraxe. Des problèmes d'aération des moules peuvent se poser, notamment pour les monoblocs injectés en raison de l'intervalle entre moules réduit voir inexistant. En effet, afin de réduire la matière et les dimensions du bloc-moules, les moules sont très rapprochés voire imbriqués les uns dans les autres. Cela empêche par ailleurs de réaliser des perforations dans certaines zones des moules où la matière est commune à deux moules adjacents sur un secteur ou une portion, ce qui nuit au bon égouttage des fromages.

Ainsi, les ensembles composés d'un plateau inférieur et de moules d'égouttage de fromages de l'art antérieur ne donnent pas entièrement satisfaction.

De plus, des problèmes de lavage de ces deux types de moule se posent. En effet, dans le premier cas, le lavage des moules un par un prend un temps considérable et ralenti la productivité tout en accroissant les risques de contaminations induites par les manipulations manuelles nombreuses des moules propres pour les repositionner pour le tour suivant. Dans le second cas, malgré la possibilité d'un lavage en tunnel, il subsiste des risques importants que des résidus de matière restent accrochés à certaines parties peu accessibles du bloc-moules (particulièrement sur les bloc-moules clipsés) d'où des risques de pollution (par exemple bactériologique) des fromages.

Un but de la présente invention est donc de résoudre les problèmes cités précédemment, à l'aide d'une solution simple à fabriquer, respectant les principes traditionnels de fabrication, facile à utiliser, et donnant des garanties de bon lavage avec une machine à laver classique, tout en supprimant les contacts manuels avec les moules après lavage.

Ainsi, la présente invention a pour objet un ensemble comportant au moins :
- un plateau inférieur pour l'égouttage de fromages par suintement du sérum que ces derniers renferment, ledit plateau comportant une surface de réception de moules délimitée par quatre rebords dressés et parallèles entre eux deux à deux,
- au moins deux moules adaptés pour l'égouttage du fromage et comportant chacun un corps principal cylindrique, lesdits moules étant adaptés pour être disposés côte-à-côte sur la surface de réception du plateau,

caractérisé en ce que chaque moule comporte en outre des moyens de renfort/calage disposés à la périphérie du corps principal et permettant, lorsque lesdits moyens de renfort/calage sont au contact d'autres moyens de renfort/calage de moule(s) immédiatement adjacent(s), aux moules de prendre appui localement contre lesdits rebords et de former un bloc unitaire avec ledit plateau, les moyens de renfort/calage empêchant tout déplacement relatifs desdits moules entre eux et par rapport au plateau.

Ainsi, le regroupement sur le plateau inférieur d'égouttage d'une quantité de moules individuels présentant les caractéristiques techniques citées précédemment apporte une cohésion à l'ensemble, empêche le déplacement des moules entre eux et permet ainsi un retournement facile de ceux-ci sans nuire à l'aération, l'élimination du sérum ou la facilité de lavage des moules.

Selon des modes de réalisation préférés, l'ensemble selon la présente invention comprend l'une au moins des caractéristiques suivantes :
- les moyens de renfort/calage sont disposés de manière immédiatement adjacente au fond et/ou au sommet du corps principal cylindrique ; ou légèrement en retrait pour faciliter la circulation des produits lessiviels ;
- chaque moule comporte au moins une série de quatre moyens de renfort/calage placés selon deux diagonales/axe de symétrie de la section transversale du corps principal ;
- chaque moule comporte deux séries parallèles de quatre moyens de renfort/calage disposées respectivement de manière immédiatement adjacente au fond et au sommet du corps principal, lesdits moyens de renfort/calage de chaque série étant placés selon deux diagonales/axe de symétrie de la section transversale du corps principal ;
- chaque moyen de renfort/calage d'une série est constitué par une excroissance latérale du corps principal comportant deux bords perpendiculaires entre eux de sorte que l'ensemble des moyens de renforts/calage de ladite série forme un contour à section carré ou rectangulaire ;
- chaque moyen de renforts/calage présente une ouverture ;
- chaque moyen de renfort/calage comporte une forme en dépouille inclinée vers le sommet ou le bas du corps principal du moule de sorte que le contact avec un autre moyen de renfort/calage d'un moule adjacent est de type linéaire ;
- l'ensemble comporte en outre un plateau coiffant supérieur adapté pour bloquer maintenir les moules au niveau de leur sommet et permettre le retournement dudit ensemble en maintenant lesdits moules en place entre la surface de réception du plateau inférieur et le plateau coiffant supérieur ;
- la forme intérieure en coupe transversale du corps principal est un cercle, un ovale ou un polygone tel qu'un carré, un rectangle, un hexagone ; et
- la forme intérieure en coupe longitudinale du moule est un cylindre, un cône ou un trapèze si le corps principal est creux, ou une cuvette si le corps principal présente un fond en forme de dôme.

L'invention va maintenant être décrite plus en détail en référence à des modes de réalisation particuliers donnés à titre d'illustration uniquement et représentés sur les figures annexées dans lesquelles :
- Les figures 1 à 3 sont des vues de dessus de différents ensembles conformes à la présente invention ;
- Les figures 4 à 6 sont des vues de dessus représentant les différents types de moules individuels des figures 1 à 3 ;
- Les figures 7 à 9 sont des vues en coupe selon la ligne D-E des figures 4 à 6 ;
- La figure 10 est une vue en perspective d'une variante de réalisation des figures 4 à 6 ;
- La figure 11 est une vue de dessus de la figure 10 ;
- La figure 12 est une vue en coupe selon la ligne AA de la figure 11 ;
- La figure 13 est une vue de détail B de la figure 12, et
- Les figures 14 à 16 sont des vues de dessus d'autres variantes de réalisation des figures 4 à 6.

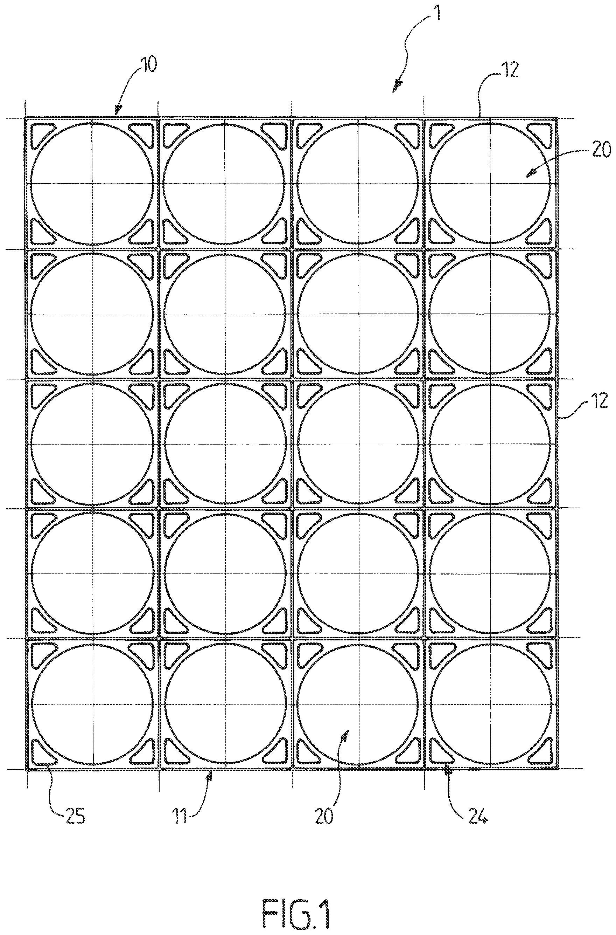

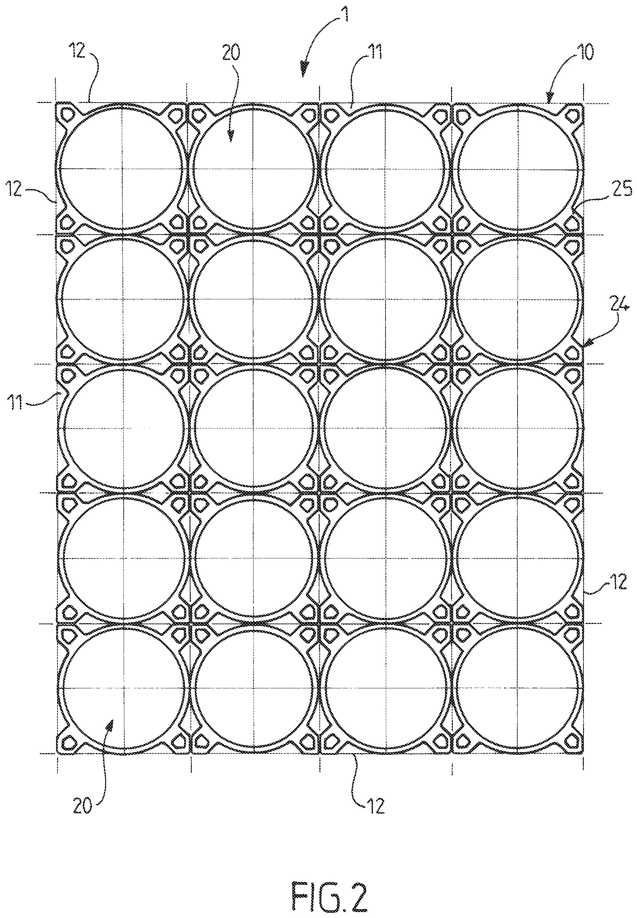

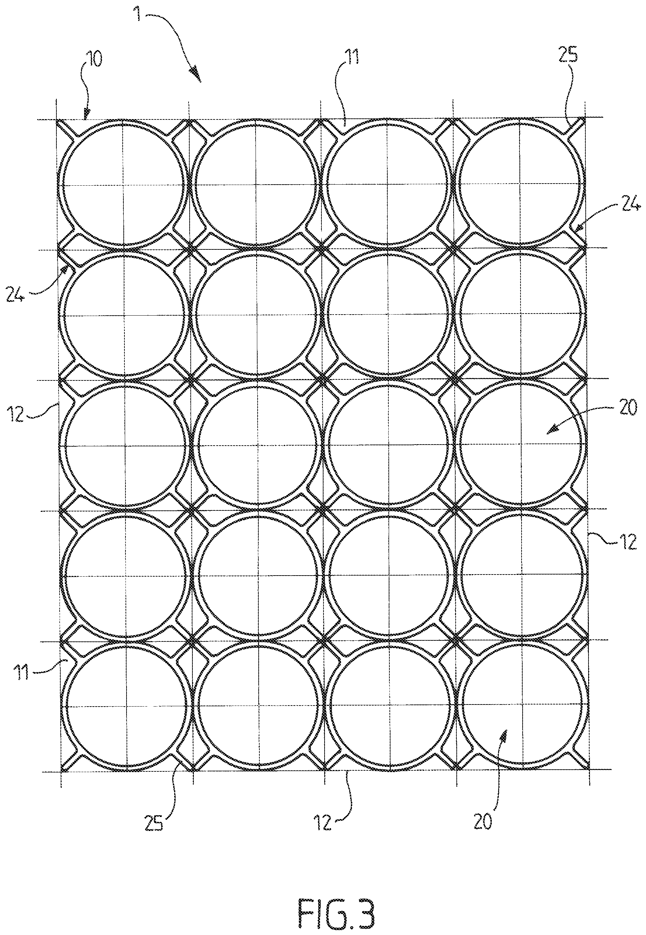

Les figures 1 à 3 représentent chacune un ensemble 1 conforme à la présente invention comportant un plateau inférieur 10 (ou table) pour l'égouttage de fromages par suintement du sérum que ces derniers renferment, ainsi que plusieurs moules 20 adaptés pour l'égouttage du fromage et répartis en cinq lignes de quatre colonnes, soit vingt moules par plateau.

Plus précisément, le plateau/table 10, de forme rectangulaire dans le cas présent, comprend une surface plane et perforée de réception 11 des moules délimitée par quatre rebords 12 dressés et parallèles entre eux deux à deux.

Chaque moule 20 comporte un corps principal cylindrique 21 présentant un fond 22 et un sommet 23, ces fonds/sommets pouvant être matérialisés soit par le plateau/table, soit, dans le cas des moules cuvette, par de la matière solidaire du moule, lesdits moules étant adaptés pour être disposés côte-à-côte sur la surface de réception 11 du plateau 10.

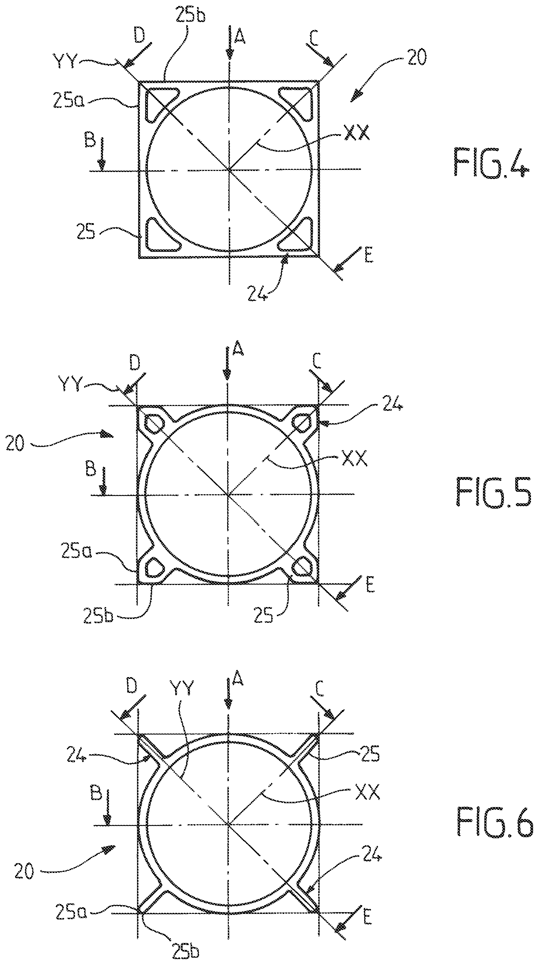

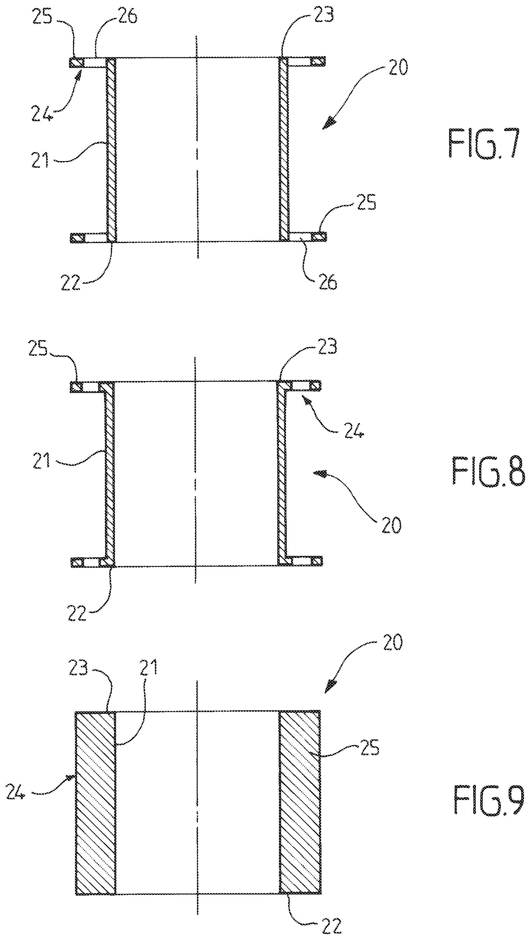

Selon la présente invention, et comme cela est visible sur les figures 4 à 12, chaque moule 20 comporte en outre des moyens de renfort/calage 24 disposés à la périphérie du corps principal 21. Ces moyens de renfort/calage 24 permettent, lorsqu'ils sont au contact d'autres moyens de renfort/calage 24 de moule(s) 20 immédiatement adjacent(s), auxdits moules d'une part de prendre appui localement contre les rebords 12 du plateau et d'autre part de former un bloc unitaire avec ledit plateau 10, les moyens de renfort/calage 24 empêchant ainsi tout déplacement relatifs desdits moules 20 entre eux et par rapport au plateau 10.

Cet ensemble quasi unitaire présente ainsi les avantages du bloc-moules de l'art antérieur.

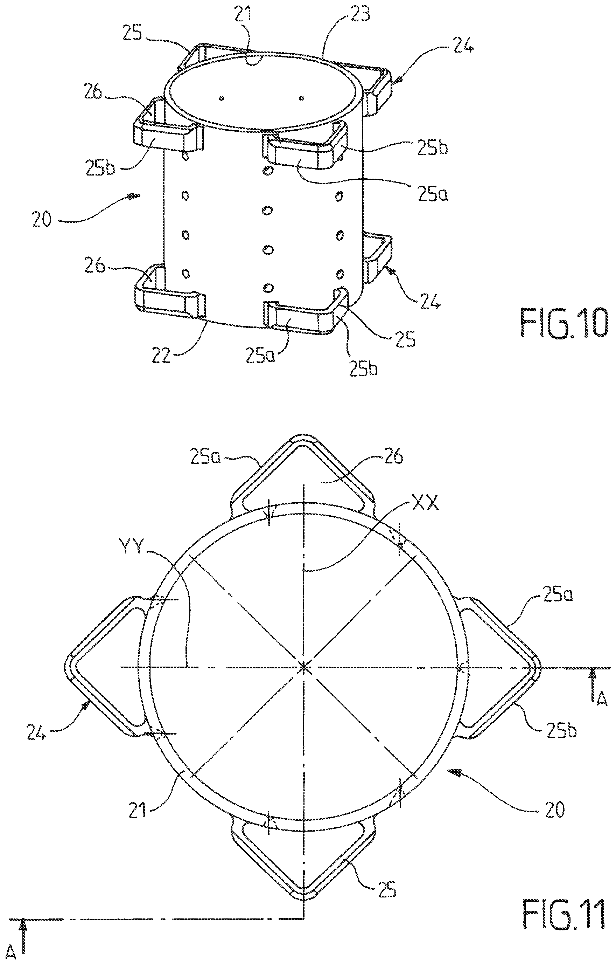

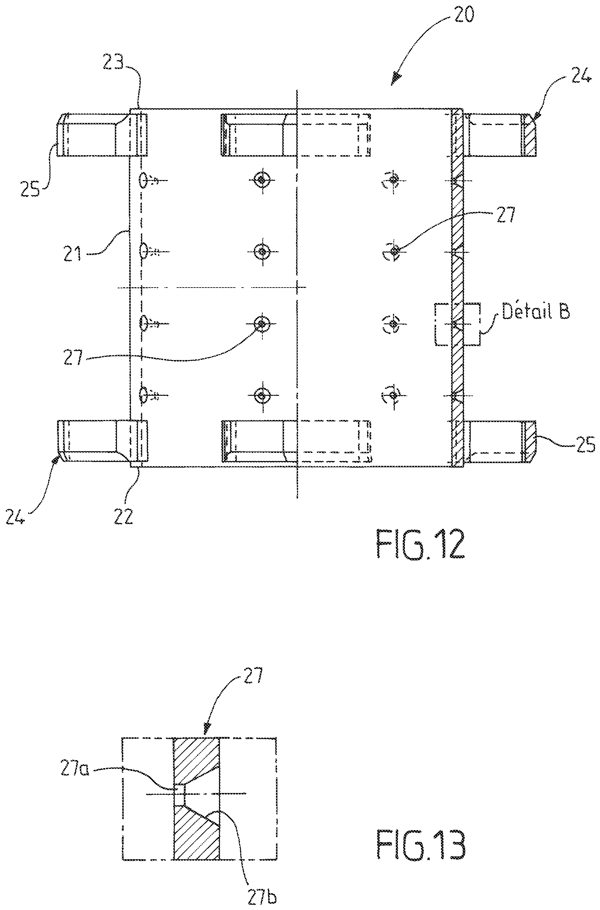

Comme cela est visible plus précisément sur les figures 10 et 12, les moyens de renfort/calage 24 sont disposés de manière immédiatement adjacente au fond 22 et au sommet 22 du corps principal cylindrique 21 de chaque moule 20.

Dans le cas présent, comme illustré notamment sur la figure 11, chaque moule 20 comporte au moins une série de quatre moyens de renfort/calage 24 placés selon deux diagonales/axe de symétrie XX et YY de la section transversale du corps principal 21.

Plus particulièrement, comme cela est visible sur les figures 10 à 12, chaque moule 20 comporte deux séries parallèles de quatre moyens de renfort/calage 24 disposées respectivement de manière immédiatement adjacente au fond et au sommet du corps principal, lesdits moyens de renfort/calage 24 de chaque série étant placés selon deux diagonales/axe de symétrie XX et YY de la section transversale du corps principal 21.

Comme le représente notamment la figure 10, chaque moyen de renfort/calage 24 est constitué par une excroissance latérale 25 du corps principal 21 comportant deux bords 25a et 25b perpendiculaires entre eux de sorte que l'ensemble des moyens de renforts/calage 24 d'une série forme un contour à section carré ou rectangulaire, selon le mode de réalisation.

Chaque excroissance 25 comporte en outre une ouverture 26 pour économiser de la matière et une forme en dépouille inclinée vers le sommet ou le bas du corps principal 21 du moule 20 de sorte que le contact avec une autre excroissance 25 d'un moule 20 adjacent est de type linéaire et limite la rétention des liquides, donc réduit la consommation de produits détersifs.

L'ensemble 1 peut également comporter un plateau coiffant supérieur adapté pour bloquer et maintenir les moules au niveau de leur sommet et permettre le retournement dudit ensemble en maintenant lesdits moules en place entre la surface de réception 11 du plateau inférieur 10 et le plateau coiffant supérieur. Ainsi, après retournement le plateau supérieur est devenu plateau inférieur.

Chaque moule est également pourvu d'orifices latéraux 27 traversant l'épaisseur de son corps principal 21, comme illustré sur les figures 10, 12 et 13. Ces orifices présentent chacun une partie cylindrique 27a à section circulaire se prolongeant, vers l'extérieur du moule 20, par une partie conique 27b de manière à améliorer l'élimination du sérum tout en facilitant le nettoyage.

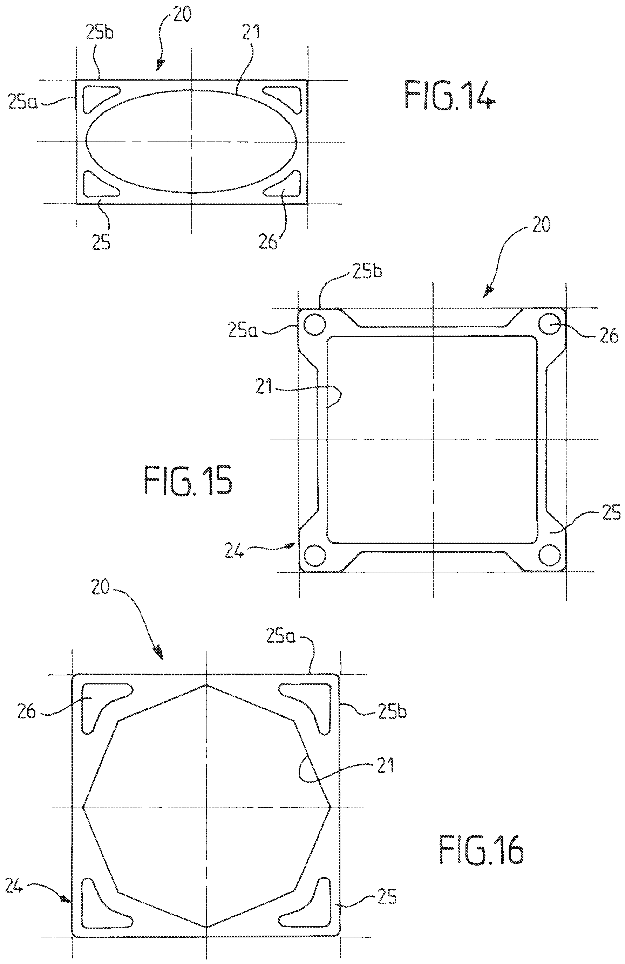

Selon des variantes de réalisation illustrées par les figures 14 à 16, la forme générale des moules 20 et/ou des moyens de renfort/calage 24 peut varier. Le moule peut être à section ovale (figure 14), carrée (figure 15) ou hexagonale (figure 16), les excroissances peuvent être juste aux angles (figure 15) ou former une ceinture (figures 14 et 16) et présenter des ouvertures de sections différente également, dès lors que les moyens de renfort/calage 24 définissent, dans le cas présent, un périmètre carré ou rectangulaire.

L'ensemble conforme à la présente invention présente ainsi les avantages suivant par rapport aux dispositifs de l'art antérieur :
- il garantit la possibilité de drainer le sérum sur toute la périphérie de la virole des moules, via les orifices, qui peuvent être positionnés sans contraintes de construction liés au regroupement du bloc-moules entraînant souvent des zones communes à deux, trois ou quatre moules adjacents ;
- il permet un libre écoulement du sérum ;
- il permet à l'air de passer entre les moules pour assurer l'homogénéité de la température des fromages pendant la phase d'acidification ;
- il facilite le lavage des moules par rapport aux deux solutions de l'art antérieur ;
- il facilite le retournement des moules par rapport à la solution à moules individuels qui ne présente pas une stabilité/rigidité/cohésion suffisante;
- il réduit les coûts de fabrication par rapport au bloc-moules ;
- il améliore la productivité ; et
- il réduit considérablement la contamination manuelle et garantit une meilleure hygiène, ce qui est un avantage important notamment en ce qui concerne la fabrication de fromages devant respecter le cahier des charges imposé pour obtenir l'appellation A.O.C.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, la forme des moules peut varier selon le type de fromage à réaliser.

Par exemple, la forme intérieure en coupe transversale du corps principal peut être un cercle, un ovale ou un polygone tel qu'un carré, un rectangle, ou un hexagone.

De même, la forme intérieure en coupe longitudinale du moule peut être un cylindre, un cône ou un trapèze si le corps principal est creux, ou une cuvette si le corps principal présente un fond en forme de dôme.

## Revendications

1. Ensemble (1) comportant au moins :
- un plateau inférieur (10) pour l'égouttage de fromages par suintement du sérum que ces derniers renferment, ledit plateau (10) comportant une surface de réception (11) de moules délimitée par quatre rebords (12) dressés et parallèles entre eux deux à deux,
- au moins deux moules (20) adaptés pour l'égouttage du fromage et comportant chacun un corps principal cylindrique (21), lesdits moules (20) étant adaptés pour être disposés côte-à-côte sur la surface de réception (11) du plateau (10),
- des moyens de renfort/calage (24) disposés à la périphérie du corps principal (21) et permettant, lorsque lesdits moyens de renfort/calage (24) sont au contact d'autres moyens de renfort/calage (24) de moule(s) (20) immédiatement adjacent(s), auxdits moules (20) de prendre appui localement contre lesdits rebords (12) et de former un bloc unitaire avec ledit plateau (10), lesdits moyens de renfort/calage (24) empêchant tout déplacement relatifs desdits moules (20) entre eux et par rapport au plateau (10), **caractérisé en ce que** chaque moyen de renfort/calage comporte une forme en dépouille inclinée vers le sommet ou le bas du corps principal du moule de sorte que le contact avec un autre moyen de renfort/calage d'un moule adjacent est de type linéaire.

2. Ensemble selon la revendication 1, **caractérisé en ce que** les moyens de renfort/calage (24) sont disposés de manière immédiatement adjacente au fond (22) et/ou au sommet (23) du corps principal cylindrique (21), ou légèrement en retrait pour faciliter la circulation des produits lessiviels.

3. Ensemble selon la revendication 2, **caractérisé en ce que** chaque moule (20) comporte au moins une série de quatre moyens de renfort/calage (24) placés selon deux diagonales/axe de symétrie (XX, YY) de la section transversale du corps principal (21).

4. Ensemble selon la revendication 3, **caractérisé en ce que** chaque moule (20) comporte deux séries parallèles de quatre moyens de renfort/calage (24) disposées respectivement de manière immédiatement adjacente au fond (22) et au sommet (23) du corps principal (21), lesdits moyens de renfort/calage (24) de chaque série étant placés selon deux diagonales/axe de symétrie (XX, YY) de la section transversale du corps principal (21).

5. Ensemble selon la revendication 3 ou 4, **caractérisé en ce que** chaque moyen de renfort/calage (24) d'une série est constitué par une excroissance latérale (25) du corps principal comportant deux bords (25a, 25b) perpendiculaires entre eux de sorte que l'ensemble des moyens de renforts/calage (24) de ladite série forme un contour à section carré ou rectangulaire.

6. Ensemble selon l'une quelconque des revendications précédentes, **caractérisé en ce que** chaque moyen de renforts/calage (24) présente une ouverture (26).

7. Ensemble selon l'une quelconque des revendications précédentes, **caractérisé en ce qu'**il comporte en outre un plateau coiffant supérieur adapté pour bloquer et maintenir les moules (20) au niveau de leur sommet et permettre le retournement dudit ensemble en maintenant lesdits moules en place entre la surface de réception (21) du plateau inférieur (10) et le plateau coiffant supérieur.

8. Ensemble selon l'une quelconque des revendications précédentes, **caractérisé en ce que** la forme intérieure en coupe transversale du corps principal (21) est un cercle, un ovale ou un polygone tel qu'un carré, un rectangle, un hexagone.

9. Ensemble selon l'une quelconque des revendications précédentes, **caractérisé en ce que** la forme intérieure en coupe longitudinale du moule est un cylindre, un cône ou un trapèze si le corps principal est creux, ou une cuvette si le corps principal présente un fond en forme de dôme.

## Patentansprüche

1. Anordnung (1), die mindestens Folgendes umfasst:
- einen unteren Teller (10) zum Abtropfen von Käsen durch Ausschwitzen des Serums, das diese Letzteren enthalten, wobei der Teller (10) eine Aufnahmeoberfläche (11) von Formen umfasst, die von vier Rändern (12) begrenzt ist, die aufgerichtet und zueinander zu je zwei parallel sind,
- mindestens zwei Formen (20), die für das Abtropfen des Käses angepasst sind und jeweils einen zylindrischen Hauptkörper (21) umfassen, wobei die Formen (20) angepasst sind, um nebeneinander auf der Aufnahmeoberfläche (11) des Tellers (10) angeordnet zu sein,
- Mittel zum Verstärken/Verkeilen (24), die an der Peripherie des Hauptkörpers (21) angeordnet sind und es, wenn die Mittel zum Verstärken/Verkeilen (24) mit anderen Mitteln zum Verstärken/Verkeilen (24) von unmittelbar benachbarten Form(en) (20) in Berührung sind, den Formen (20) erlauben, sich lokal gegen die Ränder (12) zu stützen und einen einheitlichen Block mit dem Teller (10) zu bilden, wobei die Mittel zur Verstärkung/Verkeilung (24) jede relative Verlagerung der Formen (20) untereinander und in Bezug auf den Teller (10) verhindern, **dadurch gekennzeichnet, dass** jedes Mittel zum Verstärken/Verkeilen eine Form geneigt in Schräge zu dem Scheitel oder der Unterseite des Hauptkörpers der Form derart umfasst, dass die Berührung mit einem anderen Mittel zum Verstärken/Verkeilen einer benachbarten Form linearen Typs ist.

2. Anordnung nach Anspruch 1, **dadurch gekennzeichnet, dass** die Mittel zum Verstärken/Verkeilen (24) unmittelbar benachbart zum Boden (22) und/oder zum Scheitel (23) des zylindrischen Hauptkörpers (21) oder leicht nach hinten versetzt angeordnet sind, um das Zirkulieren der Waschprodukte zu erleichtern.

3. Anordnung nach Anspruch 2, **dadurch gekennzeichnet, dass** jede Form (20) mindestens eine Reihe von vier Mitteln zum Verstärken/Verkeilen (24) umfasst, die entlang von zwei Diagonalen/Symmetrieachse (XX, YY) des Querschnitts des Hauptkörpers (21) platziert sind.

4. Anordnung nach Anspruch 3, **dadurch gekennzeichnet, dass** jede Form (20) zwei parallele Reihen zu vier Mitteln zum Verstärken/Verkeilen (24) umfasst, die jeweils unmittelbar benachbart zu dem Boden (22) und dem Scheitel (23) des Hauptkörpers (21) angeordnet sind, wobei die Mittel zum Verstärken/Verkeilen (24) jeder Reihe entlang von zwei Diagonalen/Symmetrieachse (XX, YY) des Querschnitts des Hauptkörpers (21) angeordnet sind.

5. Anordnung nach Anspruch 3 oder 4, **dadurch gekennzeichnet, dass** jedes Mittel zum Verstärken/Verkeilen (24) einer Reihe aus einer seitlichen Ausstülpung (25) des Hauptkörpers besteht, die zwei Ränder (25a, 25b) umfasst, die zueinander derart senkrecht sind, dass sämtliche Mittel zum Verstärken/Verkeilen (24) der Reihe eine Kontur mit quadratischem oder rechteckigem Querschnitt bilden.

6. Anordnung nach einem der vorhergehenden Ansprüche, **dadurch gekennzeichnet, dass** jedes Mittel zum Verstärken/Verkeilen (24) eine Öffnung (26) aufweist.

7. Anordnung nach einem der vorhergehenden Ansprüche, **dadurch gekennzeichnet, dass** sie außerdem eine aufsitzende obere Platte umfasst, die angepasst ist, um die Formen (20) im Bereich ihrer Scheitel zu blockieren und zu halten und das Umkehren der Einheit unter Halten der Formen an Ort und Stelle zwischen der Aufnahmeoberfläche (21) des unteren Tellers (10) und der oben aufsitzenden Platte zu erlauben.

8. Anordnung nach einem der vorhergehenden Ansprüche, **dadurch gekennzeichnet, dass** die innere Form im Querschnitt des Hauptkörpers (21) ein Kreis, ein Oval oder ein Vieleck wie ein Quadrat, ein Rechteck, ein Sechseck ist.

9. Anordnung nach einem der vorhergehenden Ansprüche, **dadurch gekennzeichnet, dass** die innere Form im Längsschnitt der Form ein Zylinder, ein Kegel oder ein Trapez ist, falls der Hauptkörper hohl ist, oder eine Wanne, falls der Hauptkörper einen Boden in Kuppelform aufweist.

## Claims

1. Assembly (1) comprising at least:
- a lower plate (10) for the drainage of cheeses by means of seepage of the serum which they contain, the plate (10) comprising a mould receiving surface (11) which is delimited by four edges (12) which are upright and mutually parallel in pairs,
- at least two moulds (20) which are suitable for the drainage of the cheese and which each comprise a cylindrical main body (21), the moulds (20) being suitable for being arranged side by side on the receiving surface (11) of the plate (10),
- reinforcement/bracing means (24) which are arranged at the periphery of the main body (21) and which, when the reinforcement/bracing means (24) are in contact with other reinforcement/bracing means (24) for a mould(s) (20) which is/are immediately adjacent to the moulds (20), enable abutment locally against the edges (12) and enable a unitary block to be formed with the plate (10),
the reinforcement/bracing means (24) preventing any relative displacement of the moulds (20) relative to each other and relative to the plate (10), **characterised in that** each reinforcement/bracing means comprises a shape in the form of a relief which is inclined towards the top or the bottom of the main body of the mould so that the contact with another reinforcement/bracing means of an adjacent mould is of the linear type.

2. Assembly according to claim 1, **characterised in that** the reinforcement/bracing means (24) are arranged in a manner immediately adjacent to the base (22) and/or the top (23) of the cylindrical main body (21), or slightly recessed in order to facilitate the circulation of the cleaning products.

3. Assembly according to claim 2, **characterised in that** each mould (20) comprises at least one series of four reinforcement/bracing means (24) which are placed along two diagonals/axes of symmetry (XX, YY) of the cross-section of the main body (21).

4. Assembly according to claim 3, **characterised in that** each mould (20) comprises two parallel series of four reinforcement/bracing means (24) arranged in a manner immediately adjacent to the base (22) and the top (23) of the main body (21), respectively, the reinforcement/bracing means (24) of each series being placed along two diagonals/axes of symmetry (XX, YY) of the cross-section of the main body (21).

5. Assembly according to claim 3 or 4, **characterised in that** each reinforcement/bracing means (24) of a series is constituted by a lateral protrusion (25) of the main body comprising two mutually perpendicular edges (25a, 25b) so that all of the reinforcement/bracing means (24) of the series form a contour with a square or rectangular cross-section.

6. Assembly according to any one of the preceding claims, **characterised in that** each reinforcement/bracing means (24) has an opening (26).

7. Assembly according to any one of the preceding claims, **characterised in that** it further comprises an upper covering plate which is capable of blocking and retaining the moulds (20) at the level of their top and enables the assembly to be inverted whilst the moulds are fixed in place between the receiving surface (21) of the lower plate (10) and the upper covering plate.

8. Assembly according to any one of the preceding claims, **characterised in that** the inner shape in cross-section of the main body (21) is a circle, an oval or a polygon, such as a square, a rectangle, a hexagon.

9. Assembly according to any one of the preceding claims, **characterised in that** the inner shape in longitudinal section of the mould is a cylinder, a cone or a trapezium if the main body is hollow, or a bowl if the main body has a base in the form of a dome.
